# EUROPEAN PATENT SPECIFICATION

(11) **EP 4 274 224 B1**
(45) Date of publication and mention of the grant of the patent: **23.04.2025**
(21) Application number: 21924364.9
(22) Date of filing: 07.12.2021
(51) Int. Cl.: H04N 9/82, H04N 5/77, G11B 27/031, G11B 27/10, G11B 27/34, H04N 5/262, H04N 21/218, H04N 21/472, H04N 21/854, H04N 23/90

(54) **MULTI-SCENE VIDEO RECORDING METHOD AND APPARATUS, AND ELECTRONIC DEVICE**
VERFAHREN UND VORRICHTUNG ZUR MEHRFACHSZENENVIDEOAUFZEICHNUNG UND ELEKTRONISCHE VORRICHTUNG
PROCÉDÉ ET APPAREIL D'ENREGISTREMENT VIDÉO MULTI-SCÈNE, ET DISPOSITIF ÉLECTRONIQUE

(30) Priority: 07.02.2021 CN 202110177264
(43) Date of publication of application: 08.11.2023
(73) Proprietor: Huawei Technologies Co., Ltd., Shenzhen, Guangdong 518129 (CN)
(72) Inventor: YANG, Lixia, Shenzhen, Guangdong 518129 (CN); CHEN, Shaojun, Shenzhen, Guangdong 518129 (CN); BIAN, Chao, Shenzhen, Guangdong 518129 (CN)
(74) Representative: Maiwald GmbH
(86) International application number: PCT/CN2021/136160
(87) International publication number: WO 2022/166371

(56) References cited:
- WO-A1-2015/064855
- CN-A- 101 207 807
- CN-A- 108 833 816
- CN-A- 109 218 630
- CN-A- 109 451 178
- CN-A- 110 072 070
- CN-A- 110 166 652

## Description

### TECHNICAL FIELD

This application relates to the field of terminal technologies, and in particular, to a multi-scene video recording method and apparatus, and an electronic device.

### BACKGROUND

With rapid development of science and technology, hardware and software of intelligent terminals are rapidly upgraded. Currently, a large quantity of intelligent terminals (for example, a mobile phone and a tablet computer) each have a plurality of cameras instead of one camera. A quantity of cameras on an intelligent terminal is increasing, to improve a photographing level and a video recording level of the intelligent terminal.

Currently, when using an intelligent terminal having a plurality of cameras, a user may use a multi-scene video recording function, for example, dual-scene video recording. When the user uses the multi-scene video recording function, the plurality of cameras on the intelligent terminal may record a video together, and in a recording process, images photographed by the cameras may be separately presented on a display of the intelligent terminal. During multi-scene recording, the user may adjust a recording parameter such as a focal length of each camera based on a requirement of the user. However, currently, after the multi-scene recording is completed, it is often difficult for the user to edit a video file recorded by each camera.

Chinese Patent Application CN 108 833 816 A published on 16-11-2018 deals with the synchronous recording of multi-channel audio and video and simultaneous editing of multiple tracks.

### SUMMARY

This application provides a multi-scene video recording method and apparatus, and an electronic device. A description file may be generated in a multi-scene video recording process, and video files recorded by cameras may be separately stored. Further, the video files recorded by the cameras may be simultaneously played, edited, or shared on a same interface based on the description file.

According to a first aspect, this application provides a multi-scene video recording method. The method includes: determining that a plurality of cameras on a first terminal are in a video recording state, where video recording interfaces of the cameras are displayed on a display of the first terminal; and generating a first description file, where the first description file includes video recording information of the cameras and operation information of a user in a video recording process, the first description file is used to simultaneously perform, on a same interface, a first operation on video files recorded by the cameras, the first operation includes at least one of playing, editing, and sharing, and the video files recorded by the cameras are separately stored.

Therefore, in the multi-scene video recording process, the description file may be generated, and the video files recorded by cameras may be separately stored. Further, the video files recorded by the cameras may be simultaneously played, edited, or shared on a same interface based on the description file, so that the user can perform, based on a requirement of the user, an operation on the video files generated by the multi-scene video recording, thereby improving convenience of video file processing.

In a possible implementation, the method further includes: determining that a first video file recorded by a first camera is in a playing state, where the plurality of cameras include the first camera; and loading, based on the first description file, a second video file recorded by a second camera to a playing interface of the first video file, where the plurality of cameras include the second camera, and there is a first association relationship between the first description file, the first video file, and the second video file. Therefore, multi-scene video playing is implemented.

In a possible implementation, the method further includes: determining that a third video file recorded by a third camera is in an editing state, where the plurality of cameras include the third camera; loading, based on the first description file, a fourth video file recorded by a fourth camera to an editing interface of the third video file, where the plurality of cameras include the fourth camera, and there is a second association relationship between the first description file, the third video file, and the fourth video file; determining editing information of the user for a target video file, where the target video file includes at least one of the third video file and the fourth video file; and updating the first description file based on the editing information. Therefore, multi-scene video editing is implemented.

In a possible implementation, an original video file of the target video file is not modified.

In a possible implementation, the editing information includes one or more of the following: a size of a display interface of at least one video stream, a location of the display interface of the at least one video stream, volume of the at least one video stream, or start time at which the user edits the at least one video stream each time.

In a possible implementation, the method further includes: in response to a video sharing request, synthesizing, based on the first description file, the video files recorded by the cameras into a fifth video file, and sharing the fifth video file. Therefore, multi-scene video sharing is implemented.

In a possible implementation, the video recording information includes one or more of the following: recording start time of the cameras, identification information of the cameras, display manners of the recording interfaces of the cameras, a video recording ratio, or a rotation angle of the display of the terminal to which the plurality of cameras belong in the video recording process; and the operation information includes one or more of the following: size adjustment information of the recording interfaces of the cameras, display adjustment information of the recording interfaces of the cameras, or start time at which the user operates the recording interfaces of the cameras each time.

According to a second aspect, this application provides a multi-scene video recording apparatus, including:
a determining module, configured to determine that a plurality of cameras on a first terminal are in a video recording state, where video recording interfaces of the cameras are displayed on a display of the first terminal; and
a processing module, configured to generate a first description file, where the first description file includes video recording information of the cameras and operation information of a user in a video recording process, the first description file is used to simultaneously perform, on a same interface, a first operation on video files recorded by the cameras, the first operation includes at least one of playing, editing, and sharing, and the video files recorded by the cameras are separately stored.

In a possible implementation, the processing module is further configured to:
determine that a first video file recorded by a first camera is in a playing state, where the plurality of cameras include the first camera; and
load, based on the first description file, a second video file recorded by a second camera to a playing interface of the first video file, where the plurality of cameras include the second camera, and there is a first association relationship between the first description file, the first video file, and the second video file.

In a possible implementation, the processing module is further configured to:
determine that a third video file recorded by a third camera is in an editing state, where the plurality of cameras include the third camera;
load, based on the first description file, a fourth video file recorded by a fourth camera to an editing interface of the third video file, where the plurality of cameras include the fourth camera, and there is a second association relationship between the first description file, the third video file, and the fourth video file;
determine editing information of the user for a target video file, where the target video file includes at least one of the third video file and the fourth video file; and
update the first description file based on the editing information.

In a possible implementation, an original video file of the target video file is not modified.

In a possible implementation, the editing information includes one or more of the following: a size of a display interface of at least one video stream, a location of the display interface of the at least one video stream, volume of the at least one video stream, or start time at which the user edits the at least one video stream each time.

In a possible implementation not claimed, the processing module is further configured to:
in response to a video sharing request, synthesize, based on the first description file, the video files recorded by the cameras into a fifth video file, and share the fifth video file.

In a possible implementation not claimed, the video recording information includes one or more of the following: recording start time of the cameras, identification information of the cameras, display manners of the recording interfaces of the cameras, a video recording ratio, or a rotation angle of the display of the terminal to which the plurality of cameras belong in the video recording process; and
the operation information includes one or more of the following: size adjustment information of the recording interfaces of the cameras, display adjustment information of the recording interfaces of the cameras, or start time at which the user operates the recording interfaces of the cameras each time.

According to a third aspect, this application provides an electronic device, including:
at least one memory, configured to store a program; and
at least one processor, configured to invoke the program stored in the memory, to perform the method according to the first aspect.

According to a fourth aspect, this application provides a computer storage medium. The computer storage medium stores instructions, and when the instructions are run on a computer, the computer is enabled to perform the method according to the first aspect.

According to a fifth aspect not claimed, this application provides a computer program product including instructions. When the instructions are run on a computer, the computer is enabled to perform the method according to the first aspect.

According to a sixth aspect, this application provides a chip, including at least one processor and an interface, where
the at least one processor obtains program instructions or data through the interface; and
the at least one processor is configured to execute the program instructions, to implement the method according to the first aspect.

The invention is set out in the independent claims. Preferred embodiments of the invention are outlined in the dependent claims.

### BRIEF DESCRIPTION OF DRAWINGS

FIG. 1 is a schematic diagram of an application scenario according to an embodiment of this application;
FIG. 2 is a schematic diagram of a hardware structure of an electronic device according to an embodiment of this application;
FIG. 3a is a schematic diagram of interface display of an electronic device according to an embodiment of this application;
FIG. 3b is a schematic diagram of interface display of an electronic device according to an embodiment of this application;
FIG. 3c is a schematic diagram of interface display of an electronic device according to an embodiment of this application;
FIG. 4a is a schematic diagram of information included in a description file according to an embodiment of this application;
FIG. 4b is a schematic diagram of information included in a description file according to an embodiment of this application;
FIG. 5 is a schematic diagram of a dragging trajectory curve according to an embodiment of this application;
FIG. 6 is a schematic diagram of a dual-recording video playing process according to an embodiment of this application;
FIG. 7 is a schematic diagram of information included in a description file according to an embodiment of this application;
FIG. 8 is a schematic diagram of interface display of an electronic device according to an embodiment of this application;
FIG. 9 is a schematic diagram of a dual-scene video recording process according to an embodiment of this application;
FIG. 10 is a schematic diagram of a dual-scene video viewing/editing process according to an embodiment of this application;
FIG. 11 is a schematic diagram of functional modules included in an electronic device according to an embodiment of this application;
FIG. 12 is a schematic flowchart of a multi-scene video recording method according to an embodiment of this application;
FIG. 13 is a schematic diagram of a structure of a multi-scene video recording apparatus according to an embodiment of this application; and
FIG. 14 is a schematic diagram of a structure of a chip according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In descriptions of embodiments of this application, words such as "example", "for example", or "in an example" are used to indicate giving an example, an illustration, or a description. Any embodiment or design scheme described as an "example", "for example", or "for example" in embodiments of this application should not be explained as being more preferred or having more advantages than another embodiment or design scheme. Exactly, use of the words such as "example", "for example", "in an example" is intended to present a relative concept in a specific manner.

In the descriptions of embodiments of this application, a term "and/or" describes only an association relationship for describing associated objects and indicates that three relationships may exist. For example, A and/or B may indicate the following three cases: Only A exists, both A and B exist, and only B exists. In addition, unless otherwise specified, a term "plurality" means two or more. For example, a plurality of systems are two or more systems, a plurality of terminals are two or more terminals, and a plurality of video streams are two or more video streams.

Moreover, terms "first" and "second" are merely intended for description, and shall not be understood as an indication or implication of relative importance or implicit indication of an indicated technical feature. Therefore, a feature limited by "first" or "second" may explicitly or implicitly include one or more features. Terms "include", "have", and their variants all mean "include but are not limited to", unless otherwise specifically emphasized in another manner.

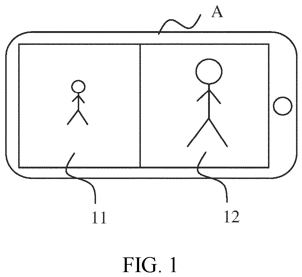

FIG. 1 is a schematic diagram of an application scenario according to an embodiment of this application. As shown in FIG. 1, a user enables a multi-scene video recording function on a terminal A. Dual-scene video recording is used as an example. The user selects two rear-facing cameras on the terminal A to record a video, and selects a split-screen display mode. In this case, video recording interfaces, namely, video recording interfaces 11 and 12, of the two rear-facing cameras may be displayed on a display of the terminal A. In the dual-scene video recording process, in this solution, video files recorded by the cameras may be stored as separate video files, that is, the video files recorded by the two rear-facing cameras are stored as two video files instead of one video file, that is, the video files recorded by the cameras are stored separately. In addition, in the dual-scene recording process, in this solution, one or more description files may be generated. The description file may include video recording information of the cameras and operation information of the user in the video recording process. The video recording information includes one or more of the following: recording start time of the cameras, identification information of the cameras, display manners of the recording interfaces of the cameras, a video recording ratio, or a rotation angle of the display of the terminal to which the plurality of cameras belong in the video recording process; and the operation information includes one or more of the following: size adjustment information of the recording interfaces of the cameras, display adjustment information of the recording interfaces of the cameras, or start time at which the user operates the recording interfaces of the cameras each time.

After the dual-scene recording is completed, when the user may choose to play one of the video files, the terminal A may automatically load, based on the description file, the video file recorded by the remaining camera to the playing interface, to restore the dual-scene recording process. When the user chooses to edit one of the video files, the terminal A may also automatically load, based on the description file, the video file recorded by the remaining camera to the editing interface, to restore the dual-scene recording process, so that the user can simultaneously edit the video files recorded by the cameras. When the user chooses to simultaneously share the video files generated by the dual-scene video recording, the terminal A may also synthesize, based on the description file, the video files recorded by the cameras, and then share a synthesized video file. The synthesized video file may present the dual-scene recording process.

It may be understood that in this solution, the terminal A may be a mobile phone, a tablet computer, a digital camera, a personal digital assistant (personal digital assistant, PDA), a wearable device, a smart television, a Huawei Vision, a Raspberry Pi (Raspberry Pi), an IndustriPi (IndustriPi), or the like. An example embodiment of the terminal A includes but is not limited to an electronic device running iOS, Android, Windows, HarmonyOS (HarmonyOS), or another operating system. Alternatively, the electronic device may be another electronic device, such as a laptop (laptop) computer having a touch-sensitive surface (for example, a touch panel). A type of the electronic device is not specifically limited in this embodiment of this application.

The following describes a schematic diagram of a hardware structure of an electronic device provided in this solution. The electronic device may be the terminal A shown in FIG. 1.

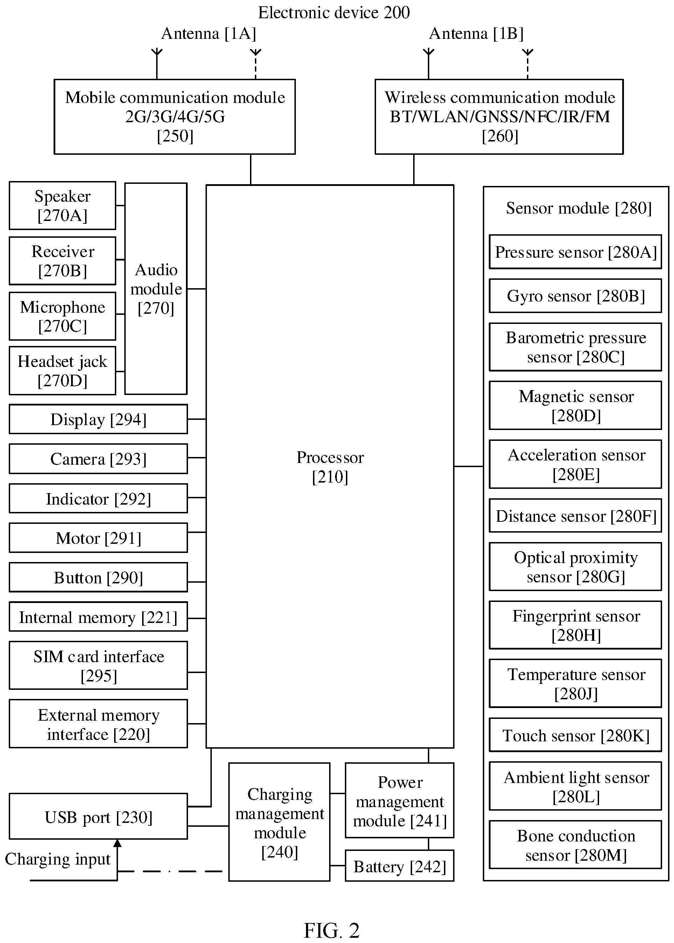

FIG. 2 is a schematic diagram of a hardware structure of an electronic device according to an embodiment of this application. As shown in FIG. 2, an electronic device 200 may include a processor 210, an external memory interface 220, an internal memory 221, an antenna 1A, an antenna 1B, a mobile communication module 250, a wireless communication module 260, an audio module 270, a speaker 270A, a receiver 270B, a microphone 270C, a sensor module 280, a button 290, a camera 293, a display 294, and the like. The sensor module 280 may include a pressure sensor 280A, a gyro sensor 280B, an acceleration sensor 280E, a distance sensor 280F, a touch sensor 280K, an ambient light sensor 280L, and the like.

It may be understood that, the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem (modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. For example, the processor 210 may determine whether cameras on the terminal are in a video recording state, may generate the description file mentioned above, may play, edit, and share, based on the description file, video files recorded by the cameras, or the like.

The controller may generate an operation control signal based on an instruction operation code and a time sequence signal, to complete control of instruction fetching and instruction execution.

A memory may be further disposed in the processor 210, and is configured to store instructions and data. In some embodiments, the memory in the processor 210 is a cache. The memory may store instructions or data that has been used or cyclically used by the processor 210. If the processor 210 needs to use the instructions or the data again, the processor 210 may directly invoke the instructions or the data from the memory, to avoid repeated access, reduce waiting time of the processor 210, and improve system efficiency.

A wireless communication function of the electronic device 200 may be implemented by using the antenna 1A, the antenna 1B, the mobile communication module 250, the wireless communication module 260, the modem, the baseband processor, and the like.

The antenna 1A and the antenna 1B are configured to transmit and receive an electromagnetic wave signal. Each antenna in the electronic device 200 may be configured to cover one or more communication frequency bands. Different antennas may be further multiplexed, to improve antenna utilization. For example, the antenna 1A may be multiplexed as a diversity antenna of a wireless local area network. In some other examples, the antenna may be used in combination with a tuning switch.

The mobile communication module 250 may provide a wireless communication solution that includes 2G/3G/4G/5G or the like and that is applied to the electronic device 200. The mobile communication module 250 may include at least one filter, a switch, a power amplifier, a low noise amplifier (low noise amplifier, LNA), and the like. The mobile communication module 250 may receive an electromagnetic wave by using at least two antennas including the antenna 1A, perform processing such as filtering or amplification on the received electromagnetic wave, and transmit the electromagnetic wave to the modem for demodulation. The mobile communication module 250 may further amplify a signal modulated by the modem processor, and convert the signal into an electromagnetic wave by using the antenna 1A for radiation. In some examples, at least some functional modules of the mobile communication module 250 may be disposed in the processor 210. In some examples, at least some functional modules of the mobile communication module 250 may be disposed in a same device as at least some modules of the processor 210.

The modem may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 270A, the receiver 270B, or the like), or displays an image or a video by using the display 294. In some examples, the modem may be an independent device. In some other examples, the modem may be independent of the processor 210, and is disposed in a same device as the mobile communication module 250 or another functional module. In some other examples, the mobile communication module 250 may be a module in the modem.

The wireless communication module 260 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communication module 260 may be one or more components integrating at least one communication processing module. The wireless communication module 260 receives an electromagnetic wave by using the antenna 1B, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave by using the antenna 1B for radiation.

The electronic device 200 implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light emitting diodes, QLED), or the like. In some examples, the electronic device 200 may include one or more displays 294. For example, the display 294 may display video recording interfaces, video playing interfaces, video editing interfaces, video sharing interfaces, and the like of the cameras on the terminal.

The electronic device 200 may implement a photographing function by using the ISP, the camera 293, the video codec, the GPU, the display 294, the application processor, and the like.

The ISP is configured to process data fed back by the camera 293. For example, during photographing, a shutter is opened, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some examples, the ISP may be disposed in the camera 293.

The camera 293 is configured to capture a static image or a video, for example, capture facial feature information and posture feature information of a person. An optical image of an object is generated through the lens, and is projected onto the photosensitive element. The photosensitive element may be a charge coupled device (charge coupled device, CCD) or a complementary metal-oxide-semiconductor (Complementary Metal-Oxide-Semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some examples, the electronic device 200 may include one or more cameras 293.

The video codec is configured to: compress or decompress a digital video. The electronic device 200 may support one or more video codecs. In this way, the electronic device 200 can play or record videos in a plurality of encoding formats, for example, moving picture experts group (moving picture experts group, MPEG) 1, MPEG 2, MPEG 3, and MPEG 4.

The external memory interface 220 may be configured to connect to an external storage card, for example, a Micro SD card, to extend a storage capability of the electronic device 200. The external storage card communicates with the processor 210 through the external memory interface 220, to implement a data storage function. For example, files such as music and a video are stored in the external storage card.

The internal memory 221 may be configured to store computer-executable program code. The executable program code includes instructions. The processor 210 runs the instructions stored in the internal memory 221, to perform various function applications of the electronic device 200 and data processing. The internal memory 221 may include a program storage area and a data storage area. The program storage area may store an operating system, an application required by at least one function (for example, a sound play function or an image play function), and the like. The data storage area may store data (for example, audio data and an address book) and the like created during use of the electronic device 200. In addition, the internal memory 221 may include a high-speed random access memory, and may further include a nonvolatile memory, for example, at least one magnetic disk storage device, a flash storage device, a universal flash memory (universal flash storage, UFS), and the like.

The electronic device 200 may implement an audio function such as music playing or recording by using the audio module 270, the speaker 270A, the receiver 270B, the microphone 270C, the application processor, and the like.

The audio module 270 is configured to convert digital audio information into an analog audio signal for output, and is also configured to convert an analog audio input into a digital audio signal. The audio module 270 may be further configured to: encode and decode an audio signal. In some examples, the audio module 270 may be disposed in the processor 210, or some functional modules in the audio module 270 are disposed in the processor 210.

The speaker 270A, also referred to as a "horn", is configured to convert an audio electrical signal into a sound signal. The electronic device 200 may listen to music or answer a hands-free call by using the speaker 270A.

The receiver 270B, also referred to as an "earpiece", is configured to convert the audio electrical signal into the sound signal. When a call is answered or voice information is received by using the electronic device 200, the receiver 270B may be put close to a human ear to listen to a voice.

The microphone 270C, also referred to as a "mike" or a "mic", is configured to convert a sound signal into an electrical signal. When making a call or sending voice information, a user may make a sound near the microphone 270C through the mouth of the user, to input the sound signal to the microphone 270C. At least one microphone 270C may be disposed in the electronic device 200. In some other examples, two microphones 270C may be disposed in the electronic device 200, to collect a sound signal and further implement a noise reduction function. In some other embodiments, three, four, or more microphones 270C may alternatively be disposed in the electronic device 200, to collect a sound signal, reduce noise, identify a sound source, implement a directional recording function, and the like.

The sensor module 280 may include a pressure sensor 280A, a gyro sensor 280B, an acceleration sensor 280E, a distance sensor 280F, a touch sensor 280K, an ambient light sensor 280L, and the like.

The pressure sensor 280Ais configured to sense a pressure signal, and may convert the pressure signal into an electrical signal. In some examples, the pressure sensor 280A may be disposed on the display 294. There are many types of pressure sensors 280A, such as a resistive pressure sensor, an inductive pressure sensor, and a capacitive pressure sensor. The capacitive pressure sensor may include at least two parallel plates made of conductive materials. When a force is applied to the pressure sensor 280A, capacitance between electrodes changes. The electronic device 200 determines pressure intensity based on the change in the capacitance. When a touch operation is performed on the display 294, the electronic device 200 detects intensity of the touch operation based on the pressure sensor 280A. The electronic device 200 may also calculate a touch location based on a detection signal of the pressure sensor 280A. In some examples, touch operations that are performed at a same touch location but have different touch operation intensity may correspond to different operation instructions. For example, when a touch operation whose touch operation intensity is less than a first pressure threshold is performed on a Messages application icon, an instruction for viewing an SMS message is executed. When a touch operation whose touch operation intensity is greater than or equal to the first pressure threshold is performed on the Messages application icon, an instruction for creating a new SMS message is performed.

The gyro sensor 280B may be configured to determine a motion posture of the electronic device 200. In some examples, an angular velocity of the electronic device 200 around three axes (namely, axes x, y, and z) may be determined by using the gyro sensor 280B. The gyro sensor 280B may be configured to implement image stabilization during photographing. For example, when the electronic device 200 is used to collect user feature information in an environment, the gyro sensor 280B detects an angle at which the electronic device 200 jitters, obtains, through calculation based on the angle, a distance for which a lens module needs to compensate, and allows the lens to cancel the jitter of the electronic device 200 through reverse motion, to implement image stabilization.

The acceleration sensor 280E may detect accelerations in various directions (usually on three axes) of the electronic device 200, and may detect magnitude and a direction of gravity when the electronic device 200 is static. The acceleration sensor 280E may be further configured to identify a posture of the electronic device, and is used in an application such as switching between a landscape mode and a portrait mode or a pedometer.

The distance sensor 280F is configured to measure a distance. The electronic device 200 may measure a distance in an infrared manner or a laser manner. In some examples, in a photographing scenario, the electronic device 200 may measure a distance through the distance sensor 280F to implement quick focusing.

The ambient light sensor 280L is configured to sense ambient light brightness. The electronic device 200 may adaptively adjust brightness of the display 294 based on the sensed ambient light brightness.

The touch sensor 280K is also referred to as a "touch device". The touch sensor 280K may be disposed in the display 294, and the touch sensor 280K and the display 294 form a touchscreen, which is also referred to as a "touchscreen". The touch sensor 280K is configured to detect a touch operation performed on or near the touch sensor 280K. The touch sensor may transfer the detected touch operation to the application processor to determine a type of a touch event. A visual output related to the touch operation may be provided by using the display 294.

The button 290 includes a power button, a volume button, an input keyboard, and the like. The button 290 may be a mechanical button, or may be a touch button. The electronic device 200 may receive a button input, and generate a button signal input related to a user setting and function control of the electronic device 200.

Next, based on the application scenario shown in FIG. 1 and the hardware structure of the electronic device shown in FIG. 2, a multi-scene video recording process of this solution is described in detail by using dual-scene video recording as an example.

### (1) A user selects a dual-scene recording mode.

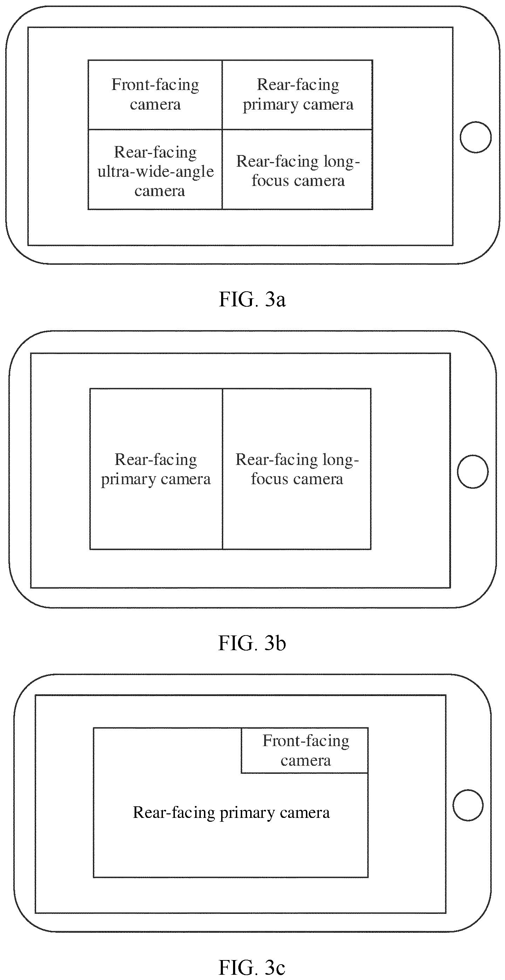

The user can enable a dual-scene recording function on a terminal, to enable the dual-scene recording mode. After the dual-scene recording mode is enabled, cameras on the terminal can be displayed for the user to select two video streams. For example, as shown in FIG. 3a, four cameras are configured on a terminal B. After the user enables the dual-scene recording mode, the four cameras may be displayed on a display interface of the terminal B, namely, a front-facing camera, a rear-facing primary camera, a rear-facing ultra-wide-angle camera, and a rear-facing long-focus camera in FIG. 3a.

### (2) The user selects cameras required for the dual-scene recording.

After the terminal displays the cameras, the user may select any two cameras. For example, as shown in FIG. 3a, the user may select the rear-facing primary camera and the rear-facing long-focus camera, may select the rear-facing primary camera and the front-facing camera, or the like. When selecting the cameras, the user may perform the selection through touch control, or perform the selection through voice control. This is not limited herein.

### (3) Dual-scene recording

After the user selects the two cameras, a video may be recorded. In the dual-scene recording process, a manner in which videos collected by the cameras are presented may be by default, for example, split-screen display (for example, horizontal split-screen or vertical split-screen display) or picture-in-picture display by default. For example, as shown in FIG. 3b, when the two cameras selected by the user are the rear-facing primary camera and the rear-facing long-focus camera, the split-screen display may be performed by default. As shown in FIG. 3c, when the two cameras selected by the user are the rear-facing primary camera and the front-facing camera, the picture-in-picture display may be performed by default.

In the dual-scene recording process, video files collected by the cameras may separately be encoded and stored. For example, if the video file recorded by the front-facing camera is a video 1, and the video file recorded by the rear-facing primary camera is a video 2, the video 1 and the video 2 may separately be stored, instead of being combined into one video file for storage. It may be understood that there may be an association relationship between the video files that are separately encoded and stored. For example, the video files recorded this time are associated through file name or database recording.

In the dual-scene recording process, a description file associated with the video generated in the dual-scene recording may be generated. The description file may include video recording information of the cameras and operation information of the user in the video recording process. The video recording information includes one or more of the following: recording start time of the cameras, identification information of the cameras, display manners of recording interfaces of the cameras, a video recording ratio, or a rotation angle of a display of the terminal to which the plurality of cameras belong in the video recording process; and the operation information includes one or more of the following: size adjustment information of the recording interfaces of the cameras, display adjustment information of the recording interfaces of the cameras, or start time at which the user operates the recording interfaces of the cameras each time.

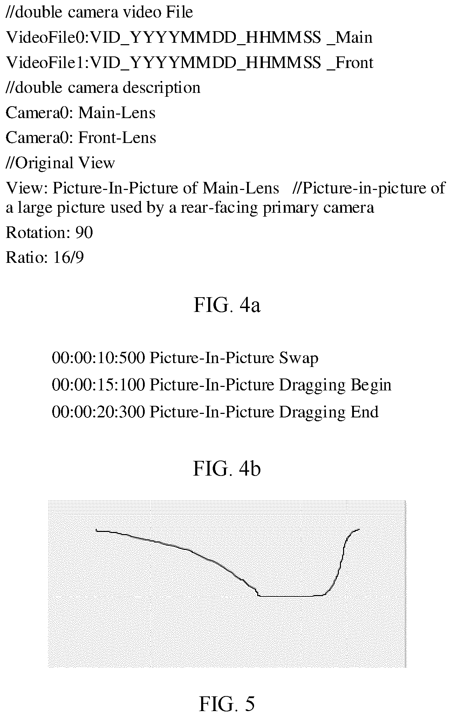

For better understanding, a format of the description file is described by using an example. As shown in FIG. 4a, the description file may include information related to describing the dual-scene video as a whole, and the information may be irrelevant to a recording timeline. In

FIG. 4a, there are names of the cameras, for example, primary camera (Main-Lens) and front-facing camera (Front-Lens); names of the video files recorded by the cameras, for example, VideoFile0: VID_YYYYMMDD_HHMMSS_Main, VideoFile1:
VID_YYYYMMDD_HHMMSS_Front; the manner in which the videos collected by the cameras, for example, Picture-In-Picture of Main-Lens //Picture-in-picture of a large picture used by the rear-facing primary camera when the dual-scene recording is enabled; landscape and portrait modes, for example, 90 degrees (portrait mode), and when the rotation angle is 180 degrees, the terminal is in the landscape mode; and the video recording ratio, for example, 16/9. As shown in FIG. 4b, the description file may also include a record of a recording process performed based on the timeline. The record may record a process of a picture change. For example, pictures of the front-facing camera and the rear-facing camera are swapped at about a 10^{th} second, and a picture-in-picture frame is dragged at about a 15^{th} second, and dragging ends at about a 20^{th} second. It may be understood that, in a process in which the user drags the picture-in-picture frame, because the user drags the picture-in-picture frame in a free and irregular manner, to reproduce the dragging operation of the user at a later stage, a dragging trajectory may be recorded. For example, a dragging trajectory curve is drawn by using a center point of a picture-in-picture rectangle as a reference point, and is recorded as a file. The dragging trajectory curve is shown in FIG. 5.

After the description file is generated, the description file may be associated with the video files recorded by the cameras that are separately stored. For example, the description file is associated with the video files through the file name and database recording.

When the user ends the dual-scene recording, the dual-scene recording is completed.

### (4) The dual-scene recorded video files are played.

The user can select any dual-scene recorded video file to play. When one of the video files is in a playing state, the terminal may superimpose, based on the association relationship between the description file and the video files that are recorded by the cameras and that are separately stored, another video file on the video file for presentation. The presentation manner during superimposition can be restored based on the description file. For example, if the presentation manner recorded in the description file is the split-screen display, the video files are presented in the split-screen display manner. In other words, when one of the video files (for example, the video file 1) is in the playing state, based on the generated description file, the another video file (for example, the video file 2) associated with the video file (for example, the video file 1) is automatically loaded to a playing interface of the video file (for example, the video file 1). For example, in a process of playing the video file 1, current playing time information may be obtained, then a playing state of another video file at the current playing time is found from the description file based on the current playing time information, and then, the another video file is loaded to the playing interface of the video file 1 based on the playing state of the another video file.

In the process of playing the dual-scene recorded video files, when the description file records a user interaction change (for example, ratio adjustment of a split-screen window or a picture-in-picture swap) at a specific time point, the user interaction change may also be restored based on the description file, to correspondingly adjust the playing picture in the playing process, so as to implement same effect in the playing and the recording processes of the user. For example, the description file records that the user drags a picture at a 10^{th} second to a 15^{th} second. When the playing reaches the 10^{th} second, the dragging operation of the user starts to be reproduced based on the dragging trajectory of the user recorded in the description file.

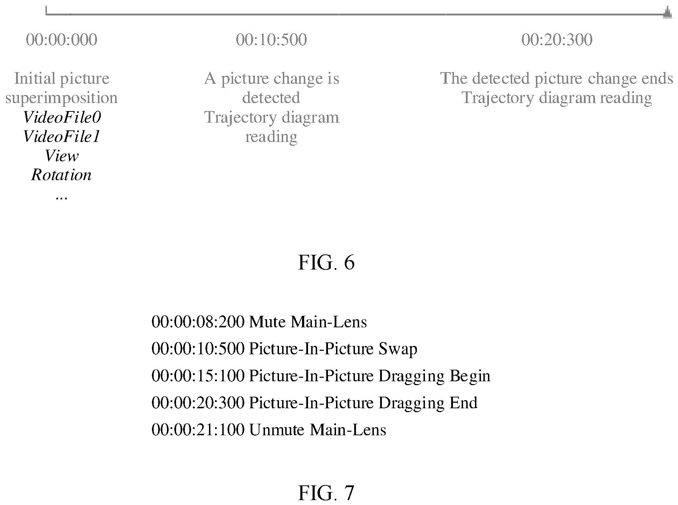

It may be understood that, in the process of playing the dual-scene recorded video files, each video file may be in a read-only state. In addition, the generated description file may also be in the read-only state. In addition, that the video file is in the playing state described in this solution may mean that the user has selected to play the video file, that is, the terminal receives a playing instruction delivered by the user, but the terminal has not started to play the video file. This stage may be understood as a ready playing state. That the video file is in the playing state described in this solution may alternatively mean that after the terminal receives a playing instruction delivered by the user, the terminal has started to play the video file, and this stage may be understood as a formal playing state. For example, as shown in FIG. 6, the video file VideoFile0 is not formally played at 00:00:000. In this case, another video file VideoFile1 may be loaded, and in the loading process, a landscape/portrait mode may be determined based on the generated description file. When playing time reaches 00:10:500, the description file records that a picture change is detected. In this case, a trajectory diagram of the picture change may be read, and a picture change process may be reproduced based on the trajectory diagram. When the playing time reaches 00:20:300, the description file records that the detected picture change ends, and in this case, the picture change reproduction process may be ended.

### (5) The dual-scene recorded video files are edited.

The user can select any dual-scene recorded video file to edit. When one of the video files is in an editing state, the terminal may superimpose, based on the association relationship between the description file and the video files that are recorded by the cameras and that are separately stored, the other video file on the video file for presentation. The presentation manner during superimposition can be restored based on the description file. For example, if the presentation manner recorded in the description file is the split-screen display, the video files are presented in the split-screen display manner. In other words, when one of the video files (for example, the video file 1) is in the playing state, based on the generated description file, the other video file (for example, the video file 2) associated with the video file (for example, the video file 1) is automatically loaded to an editing interface of the video file (for example, the video file 1).

In a process of editing the dual-scene recorded video files, editing information of the video files by the user may synchronously be recorded. Then, the description file generated in the dual-scene recording process is updated based on the recorded editing information. The editing information may include one or more of the following: a size of a display interface of at least one video stream, a location of the display interface of the at least one video stream, volume of the at least one video stream, or start time at which the user edits the at least one video stream each time. It may be understood that one video stream may correspond to one video file. For example, the editing operation of the user may include: adjustment of a multi-scene interface, for example, adjustment of a size of a split-screen picture and a picture-in-picture swap and picture-in-picture dragging. The editing operation may also include selecting a picture to perform audio muting processing and the like. For example, as shown in FIG. 7, the recorded editing information of the user is as follows: mute processing is performed on the video file recorded by the primary camera at 00:00:08:200, picture-in-picture swap processing is performed at 00:00:10:500, picture-in-picture dragging processing starts to be performed at 00:00:15:100, the picture-in-picture dragging processing ends at 00:00:20:300, and the video file recorded by the primary camera is unmuted at 00:00:21:100.

It may be understood that the editing operation performed by the user on each video file may further include superimposing a filter, text, music, a watermark frame, and the like on the video file. A related static resource (such as the music and the watermark frame) used by the user in the editing operation may also be stored together with the description file, so that the related static resource can be directly invoked during subsequent playing.

It should be noted that in this solution, when the user edits the video files, an original video file is not modified. When the edited video file is later shared, the edited video file may be reproduced on the original video file based on the updated description file.

### (6) The dual-scene recorded video files are shared.

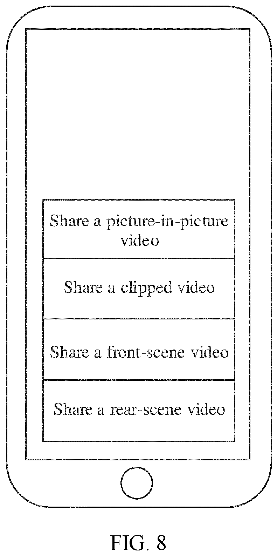

The user can share a plurality of video files. During sharing, the user can select a single video file to share or combine the plurality of video files to share. For example, as shown in FIG. 8, the user may choose to share a picture-in-picture video, that is, the plurality of video files, may choose to share a clipped video, namely, the video file edited by the user, or may choose to share a front-scene video or a rear-scene video, that is, the single video file. It may be understood that in FIG. 8, in addition to sharing the picture-in-picture video, the user may alternatively select a video in another mode, for example, a video in a split-screen mode. The picture-in-picture video and the video in the split-screen mode may be referred to as a multi-scene recorded video.

In this solution, logic when the video files are combined and shared is similar to the logic when the video files are played or edited. Similarly, states, superimposed editing effect, and the like of the video files during the recording process are read from the description file, and the plurality of video files are combined into one video file and shared to the social platform or another device. In other words, after the user delivers a video sharing request, the video files recorded by the cameras may be synthesized into one video file based on the generated or updated description file, and then the synthesized video file is shared. For example, the video file that needs to be synthesized and the corresponding description file may be written into a cache stream, and then compression processing may be performed on the cache stream, to obtain the combined video file. For example, during video file synthesis, a correspondence between a video frame and a timestamp in each video file may be first established, and then a plurality of video frames corresponding to a same time stamp are synthesized into one video frame. During the synthesis, a location of the video frames on a same interface after the synthesis may be determined based on locations of the video frames under the timestamp in the description file. Finally, the plurality of synthesized video frames are processed, to obtain the synthesized video file.

To facilitate understanding of the foregoing described dual-scene video recording process, based on the foregoing descriptions, dual-recording video recording is still used as an example for description below. It may be understood that the following description is another expression of the foregoing description, and the two are combined.

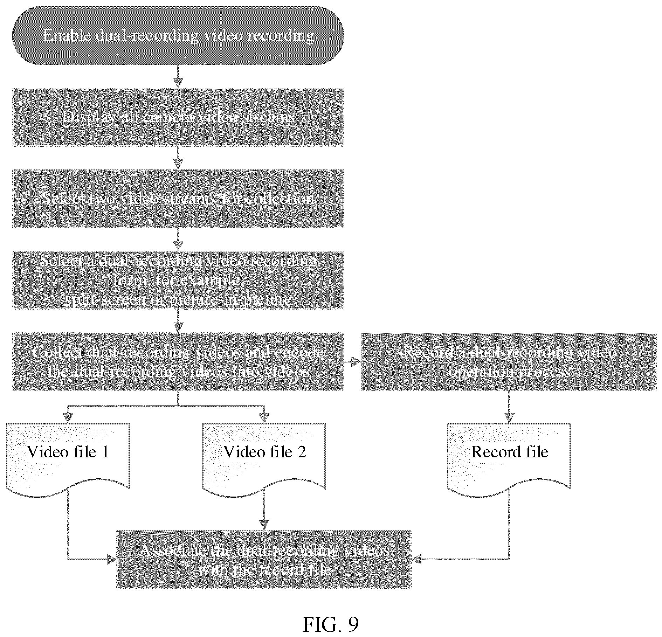

For the dual-scene video recording process, as shown in FIG. 9, first, the dual-recording video recording is enabled on a terminal. Then, all camera video streams are displayed on the terminal. After that, a user can select two video streams for collection, and select a dual-recording video recording form, for example, split-screen or picture-in-picture. Then, the cameras selected by the user may collect dual-recording videos and the dual-recording videos are separately encoded into videos, that is, two video files, a video file 1 and a video file 2, are generated. In addition, in the recording process, a dual-recording video operation process is recorded, and a record file (namely, the description file mentioned above) is generated. Finally, the dual-recording videos are associated with the record file.

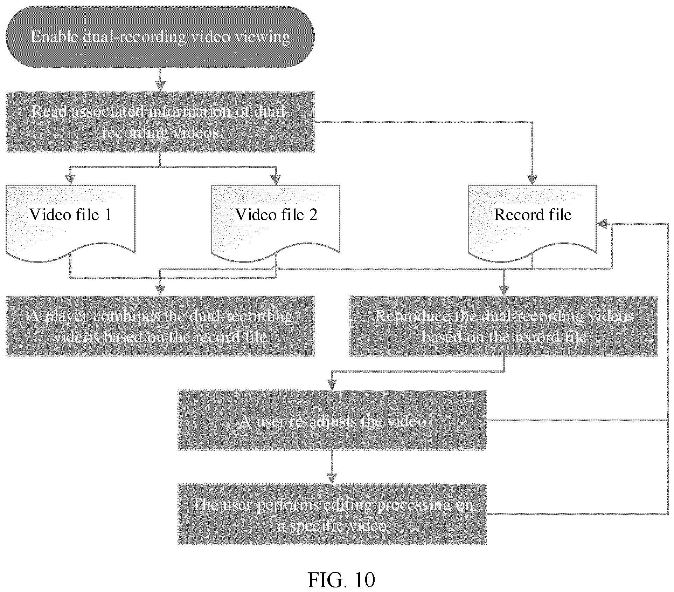

For a dual-scene video viewing process, as shown in FIG. 10, first, the user enables video viewing on the terminal. Then, the terminal reads associated information of the dual-recording videos, to determine the video file 1, the video file 2, and the record file (namely, the description file mentioned above). Then, a player in the terminal may combine and play the dual-recording videos based on the record file.

For a dual-scene video editing process, still refer to FIG. 10. First, the user enables video viewing on the terminal. Then, the terminal reads the associated information of the dual-recording videos, to determine the video file 1, the video file 2, and the record file (namely, the description file mentioned above). Then, the terminal can reproduce the dual-recording videos based on the record file. Then, the user re-adjusts the video and performs editing processing on a specific video, and finally, update the record file (namely, the description file mentioned above) based on editing information of the user.

Next, based on the foregoing descriptions, functional modules involved in the terminal mentioned in this solution are described by using dual-scene video recording as an example. It may be understood that the functional modules described below may be configured to implement the dual-scene recording process described above. For detailed working processes of the functional modules, refer to the descriptions in the dual-scene recording process above, and details are not described one by one herein again. In addition, implementation of the functional modules involved in the terminal may be implemented by, but is not limited to, the processor 210 in the electronic device 200 described in FIG. 2.

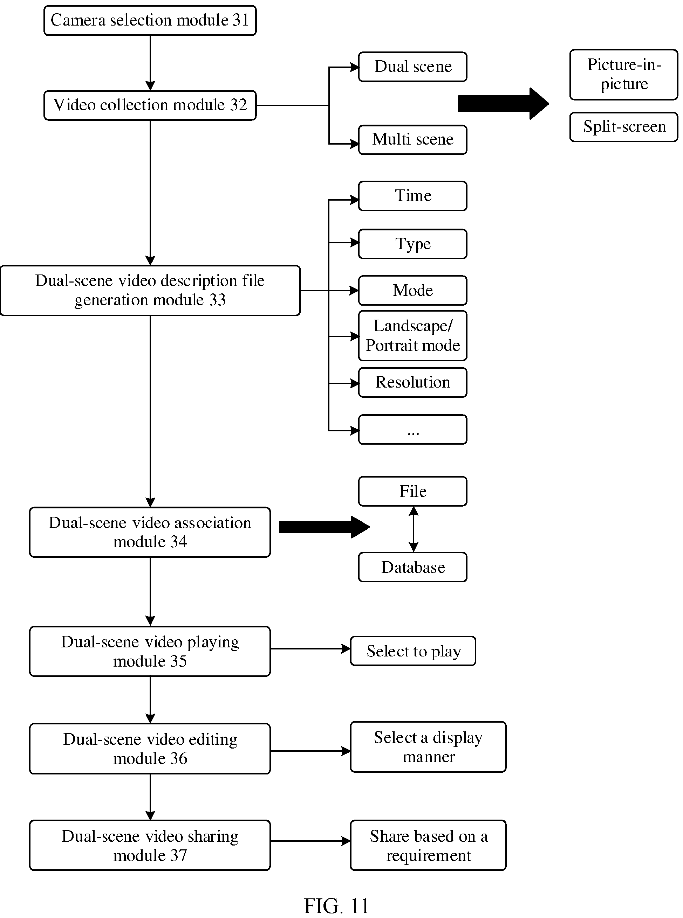

As shown in FIG. 11, in this solution, the terminal may include a camera selection module 31, a video collection module 32, a dual-scene video description file generation module 33, a dual-scene video association module 34, a dual-scene video playing module 35, a dual-scene video editing module 36, and a dual-scene video sharing module 37.

The camera selection module 31 may collect video streams of cameras of the terminal, that is, collect videos photographed by the cameras.

The video collection module 32 may select two video streams for output based on the camera selection module 31, and separately encode and store the two video streams during the output. The video collection module 32 may present the two video streams in a default manner, for example, picture-in-picture or split-screen. When multi-scene video recording is performed, the video collection module 32 may also output more than two video streams, for example, three video streams, or four video streams.

The dual-scene video description file generation module 33 may generate a description file associated with dual-scene videos when the video collection module 32 outputs the two video files. For example, the description file may include time, a type, a mode, a landscape/portrait mode, a resolution, and the like.

The dual-scene video association module 34 may associate, in a specific manner, the two video files and one description file separately recorded, and the association logic may be association through file name or database recording.

The dual-scene video playing module 35 may, when the user selects any dual-scene video to play, superimpose another video and the video based on the association relationship provided by the dual-scene video association module 34, and a presentation manner during the superimposition is completely restored by using the associated description file.

The dual-scene video editing module 36 may synchronously write an editing operation into the associated description file when the user edits the dual-scene videos, that is, update, based on editing information of the user, the description file generated by the dual-scene video description file generation module 33. For example, the dual-scene video editing module 36 may be provided for the user to perform editing on a display manner.

The dual-scene video sharing module 37 enables the user to share based on a requirement, for example, share one or more video files. When the user chooses to share a plurality of video files, the dual-scene video sharing module 37 may combine the plurality of video files into one video file and share the video file to a social platform or another device.

The following describes a multi-scene video recording method provided in embodiments of this application based on the multi-scene video recording process described above. It may be understood that the method is another expression of the multi-scene video process described above, and the two are combined. The method is proposed based on the multi-scene video recording process described above. For some or all content in the method, refer to the descriptions of the multi-scene video recording process described above.

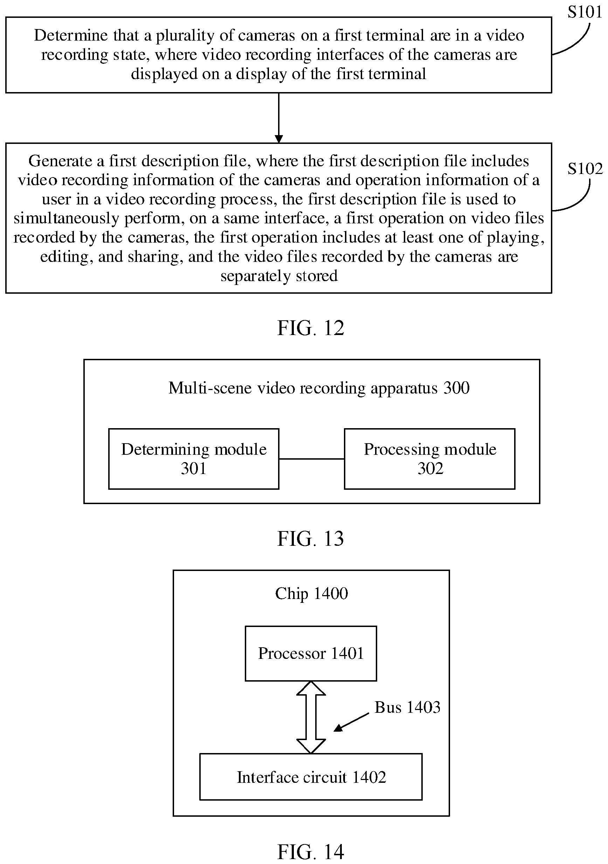

FIG. 12 is a schematic flowchart of a multi-scene video recording method according to an embodiment of this application. It may be understood that the method may be performed by any apparatus, device, platform, or device cluster that has computing and processing capabilities. As shown in FIG. 8, the multi-scene video recording method includes the following steps.

Step S101: Determine that a plurality of cameras on a first terminal are in a video recording state, where video recording interfaces of the cameras are displayed on a display of the first terminal.

Step S102: Generate a first description file, where the first description file includes video recording information of the cameras and operation information of a user in a video recording process, the first description file is used to simultaneously perform, on a same interface, a first operation on video files recorded by the cameras, the first operation includes at least one of playing, editing, and sharing, and the video files recorded by the cameras are separately stored. It may be understood that the first description file is the description file described above.

In an example, the method may further determine that a first video file recorded by a first camera is in a playing state, where the plurality of cameras include the first camera; and load, based on the first description file, a second video file recorded by a second camera to a playing interface of the first video file, where the plurality of cameras include the second camera, and there is a first association relationship between the first description file, the first video file, and the second video file.

In an example, the method may further determine that a third video file recorded by a third camera is in an editing state, where the plurality of cameras include the third camera; load, based on the first description file, a fourth video file recorded by a fourth camera to an editing interface of the third video file, where the plurality of cameras include the fourth camera, and there is a second association relationship between the first description file, the third video file, and the fourth video file; determine editing information of the user for a target video file, where the target video file includes at least one of the third video file and the fourth video file; and update the first description file based on the editing information.

In an example, an original video file of the target video file is not modified.

In an example, the editing information includes one or more of the following: a size of a display interface of at least one video stream, a location of the display interface of the at least one video stream, volume of the at least one video stream, or start time at which the user edits the at least one video stream each time.

In an example, the method may further synthesize, in response to a video sharing request based on the first description file, the video files recorded by the cameras into a fifth video file, and share the fifth video file.

In an example, the video recording information includes one or more of the following: recording start time of the cameras, identification information of the cameras, display manners of recording interfaces of the cameras, a video recording ratio, or a rotation angle of a display of the terminal to which the plurality of cameras belong in the video recording process; and the operation information includes one or more of the following: size adjustment information of the recording interfaces of the cameras, display adjustment information of the recording interfaces of the cameras, or start time at which the user operates the recording interfaces of the cameras each time.

It may be understood that, in this solution, in the multi-scene video recording process, the video files recorded by the cameras are separately stored, and the description file is generated. Therefore, during subsequent video processing, the video files recorded by the cameras may be simultaneously played, edited, or shared on a same interface based on the description file, so that the user can perform, based on a requirement of the user, an operation on the video files generated by the multi-scene video recording, thereby improving convenience of video file processing.

According to the method in the foregoing embodiments, an embodiment of this application provides a multi-scene video recording apparatus. FIG. 13 is a schematic diagram of a structure of a multi-scene video recording apparatus according to an embodiment of this application. As shown in FIG. 13, the multi-scene video recording apparatus 300 includes a determining module 301 and a processing module 302. The determining module 301 may be configured to determine that a plurality of cameras on a first terminal are in a video recording state, where video recording interfaces of the cameras are displayed on a display of the first terminal; and the processing module 302 may be configured to generate a first description file, where the first description file includes video recording information of the cameras and operation information of a user in a video recording process, the first description file is used to simultaneously perform, on a same interface, a first operation on video files recorded by the cameras, the first operation includes at least one of playing, editing, and sharing, and the video files recorded by the cameras are separately stored.

In an example, the processing module 302 may be further configured to determine that a first video file recorded by a first camera is in a playing state, where the plurality of cameras include the first camera; and load, based on the first description file, a second video file recorded by a second camera to a playing interface of the first video file, where the plurality of cameras include the second camera, and there is a first association relationship between the first description file, the first video file, and the second video file.

In an example, the processing module 302 may be further configured to determine that a third video file recorded by a third camera is in an editing state, where the plurality of cameras include the third camera; load, based on the first description file, a fourth video file recorded by a fourth camera to an editing interface of the third video file, where the plurality of cameras include the fourth camera, and there is a second association relationship between the first description file, the third video file, and the fourth video file; determine editing information of the user for a target video file, where the target video file includes at least one of the third video file and the fourth video file; and update the first description file based on the editing information.

In an example, an original video file of the target video file is not modified.

In an example, the editing information includes one or more of the following: a size of a display interface of at least one video stream, a location of the display interface of the at least one video stream, volume of the at least one video stream, or start time at which the user edits the at least one video stream each time.

In an example, the processing module 302 may be further configured to synthesize, in response to a video sharing request based on the first description file, the video files recorded by the cameras into a fifth video file, and share the fifth video file.

In an example, the video recording information includes one or more of the following: recording start time of the cameras, identification information of the cameras, display manners of recording interfaces of the cameras, a video recording ratio, or a rotation angle of a display of the terminal to which the plurality of cameras belong in the video recording process; and the operation information includes one or more of the following: size adjustment information of the recording interfaces of the cameras, display adjustment information of the recording interfaces of the cameras, or start time at which the user operates the recording interfaces of the cameras each time.

It should be understood that the foregoing apparatus is configured to perform the method in the foregoing embodiments, and an implementation principle and technical effect of a corresponding program module in the apparatus are similar to the descriptions in the foregoing method. For a working process of the apparatus, refer to a corresponding process in the foregoing method. Details are not described herein again.

According to the method in the foregoing embodiments, an embodiment of this application further provides a chip. FIG. 14 is a schematic diagram of a structure of a chip according to an embodiment of this application. As shown in FIG. 14, a chip 1400 includes one or more processors 1401 and an interface circuit 1402. Optionally, the chip 1400 may further include a bus 1403. Details are as follows:

The processor 1401 may be an integrated circuit chip and has a signal processing capability. In an implementation process, the steps of the foregoing method may be completed by using a hardware integrated logic circuit in the processor 1401, or by using instructions in a form of software. The processor 1401 may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor, or the like.

The interface circuit 1402 may send or receive data, instructions, or information. The processor 1401 may process the data, the instructions, or other information received through the interface circuit 1402, and send, through the interface circuit 1402, information obtained after processing.

Optionally, the chip 1400 further includes a memory. The memory may include a read-only memory and a random access memory, and provide operation instructions and data for the processor. A part of the memory may further include a nonvolatile random access memory (NVRAM).

Optionally, the memory stores an executable software module or a data structure, and the processor may perform a corresponding operation by invoking operation instructions (the operation instructions may be stored in an operating system) stored in the memory.

Optionally, the interface circuit 1402 may be configured to output an execution result of the processor 1401.

It should be noted that functions corresponding to each of the processor 1401 and the interface circuit 1402 may be implemented by using a hardware design, may be implemented by using a software design, or may be implemented by using a combination of software and hardware. This is not limited herein.

It should be understood that the steps in the foregoing method embodiments may be completed by using a logic circuit in a form of hardware or instructions in a form of software in the processor. The chip may be applied to the electronic device shown in FIG. 2.

It may be understood that, the processor in embodiments of this application may be a central processing unit (central processing unit, CPU), may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application. The scope of the present invention is defined by the claims.

## Claims

1. A multi-scene video recording method, wherein the method comprises:
determining (S101) that a plurality of cameras on a first terminal are in a video recording state, wherein video recording interfaces of the cameras are displayed on a display of the first terminal; and
generating (S102) a first description file, wherein the first description file comprises video recording information of the cameras and operation information of a user in a video recording process, the first description file is used to simultaneously perform, on a same interface, a first operation on video files recorded by the cameras, the first operation comprises at least one of playing, editing, and sharing, and the video files recorded by the cameras are separately stored.

2. The method according to claim 1, wherein the method further comprises:
determining that a first video file recorded by a first camera is in a playing state, wherein the plurality of cameras comprise the first camera; and
loading, based on the first description file, a second video file recorded by a second camera to a playing interface of the first video file, wherein the plurality of cameras comprise the second camera, and there is a first association relationship between the first description file, the first video file, and the second video file.

3. The method according to claim 1 or 2, wherein the method further comprises:
determining that a third video file recorded by a third camera is in an editing state, wherein the plurality of cameras comprise the third camera;
loading, based on the first description file, a fourth video file recorded by a fourth camera to an editing interface of the third video file, wherein the plurality of cameras comprise the fourth camera, and there is a second association relationship between the first description file, the third video file, and the fourth video file;
determining editing information of the user for a target video file, wherein the target video file comprises at least one of the third video file and the fourth video file; and
updating the first description file based on the editing information.

4. The method according to claim 3, wherein an original video file of the target video file is not modified.

5. The method according to claim 3 or 4, wherein the editing information comprises one or more of the following: a size of a display interface of at least one video stream, a location of the display interface of the at least one video stream, volume of the at least one video stream, or start time at which the user edits the at least one video stream each time.

6. The method according to any one of claims 1 to 5, wherein the method further comprises:
in response to a video sharing request, synthesizing, based on the first description file, the video files recorded by the cameras into a fifth video file, and sharing the fifth video file.

7. The method according to any one of claims 1 to 6, wherein the video recording information comprises one or more of the following: recording start time of the cameras, identification information of the cameras, display manners of the recording interfaces of the cameras, a video recording ratio, or a rotation angle of the display of the terminal to which the plurality of cameras belong in the video recording process; and
the operation information comprises one or more of the following: size adjustment information of the recording interfaces of the cameras, display adjustment information of the recording interfaces of the cameras, or start time at which the user operates the recording interfaces of the cameras each time.

8. A multi-scene video recording apparatus (300) comprising:
a determining module (301), configured to determine that a plurality of cameras on a first terminal are in a video recording state, wherein video recording interfaces of the cameras are displayed on a display of the first terminal; and
a processing module (302), configured to generate a first description file, wherein the first description file comprises video recording information of the cameras and operation information of a user in a video recording process, the first description file is used to simultaneously perform, on a same interface, a first operation on video files recorded by the cameras, the first operation comprises at least one of playing, editing, and sharing, and the video files recorded by the cameras are separately stored.

9. The apparatus according to claim 8, wherein the processing module is further configured to:
determine that a first video file recorded by a first camera is in a playing state, wherein the plurality of cameras comprise the first camera; and
load, based on the first description file, a second video file recorded by a second camera to a playing interface of the first video file, wherein the plurality of cameras comprise the second camera, and there is a first association relationship between the first description file, the first video file, and the second video file.

10. The apparatus according to claim 8 or 9, wherein the processing module is further configured to:
determine that a third video file recorded by a third camera is in an editing state, wherein the plurality of cameras comprise the third camera;
load, based on the first description file, a fourth video file recorded by a fourth camera to an editing interface of the third video file, wherein the plurality of cameras comprise the fourth camera, and there is a second association relationship between the first description file, the third video file, and the fourth video file;
determine editing information of the user for a target video file, wherein the target video file comprises at least one of the third video file and the fourth video file; and
update the first description file based on the editing information.

11. The apparatus according to claim 10, wherein an original video file of the target video file is not modified.

12. The apparatus according to claim 10 or 11, wherein the editing information comprises one or more of the following: a size of a display interface of at least one video stream, a location of the display interface of the at least one video stream, volume of the at least one video stream, or start time at which the user edits the at least one video stream each time.

13. An electronic device, comprising:
at least one memory, configured to store a program; and
at least one processor, configured to invoke the program stored in the memory, to perform the method according to any one of claims 1 to 7.

14. A computer storage medium, wherein the computer storage medium stores a computer program, and when the computer program is executed by a processor, the method according to any one of claims 1 to 7 is implemented.

15. A chip (1400), comprising at least one processor (1401) and an interface (1402), wherein
the at least one processor obtains program instructions or data through the interface; and
the at least one processor is configured to execute the program instructions, to implement the method according to any one of claims 1 to 7.

## Patentansprüche

1. Verfahren zur Mehrfachszenenvideoaufzeichnung, wobei das Verfahren Folgendes umfasst:
Bestimmen (S101), dass sich eine Vielzahl von Kameras auf einem ersten Endgerät in einem Videoaufzeichnungszustand befindet, wobei Videoaufzeichnungsschnittstellen der Kameras auf einer Anzeige des ersten Endgeräts angezeigt werden; und
Erzeugen (S102) einer ersten Beschreibungsdatei, wobei die erste Beschreibungsdatei Videoaufzeichnungsinformationen der Kameras und Bedienungsinformationen eines Benutzers in einem Videoaufzeichnungsprozess umfasst, die erste Beschreibungsdatei verwendet wird, um auf derselben Schnittstelle gleichzeitig einen ersten Vorgang an von den Kameras aufgezeichneten Videodateien durchzuführen, der erste Vorgang mindestens eines von Abspielen, Bearbeiten und Teilen umfasst und die von den Kameras aufgezeichneten Videodateien separat gespeichert werden.

2. Verfahren nach Anspruch 1, wobei das Verfahren ferner Folgendes umfasst:
Bestimmen, dass eine von einer ersten Kamera aufgezeichnete erste Videodatei sich in einem Wiedergabezustand befindet, wobei die Vielzahl von Kameras die erste Kamera umfasst; und
Laden einer zweiten Videodatei, die von einer zweiten Kamera aufgezeichnet wurde, in eine Wiedergabeschnittstelle der ersten Videodatei auf Grundlage der ersten Beschreibungsdatei, wobei die Vielzahl von Kameras die zweite Kamera umfasst und eine erste Zuordnungsbeziehung zwischen der ersten Beschreibungsdatei, der ersten Videodatei und der zweiten Videodatei besteht.

3. Verfahren nach Anspruch 1 oder 2, wobei das Verfahren ferner Folgendes umfasst:
Bestimmen, dass eine dritte Videodatei, die von einer dritten Kamera aufgezeichnet wurde, sich in einem Bearbeitungszustand befindet, wobei die Vielzahl von Kameras die dritte Kamera umfasst;
Laden einer vierten Videodatei, die von einer vierten Kamera aufgezeichnet wurde, in eine Bearbeitungsschnittstelle der dritten Videodatei auf Grundlage der ersten Beschreibungsdatei, wobei die Vielzahl von Kameras die vierte Kamera umfasst und eine zweite Zuordnungsbeziehung zwischen der ersten Beschreibungsdatei, der dritten Videodatei und der vierten Videodatei besteht;
Bestimmen von Bearbeitungsinformationen des Benutzers für eine Zielvideodatei, wobei die Zielvideodatei mindestens eine von der dritten Videodatei und der vierten Videodatei umfasst; und
Aktualisieren der ersten Beschreibungsdatei auf Grundlage der Bearbeitungsinformationen.

4. Verfahren nach Anspruch 3, wobei eine Originalvideodatei der Zielvideodatei nicht verändert wird.

5. Verfahren nach Anspruch 3 oder 4, wobei die Bearbeitungsinformationen eines oder mehrere von Folgendem umfassen: eine Größe einer Anzeigeschnittstelle von mindestens einem Videostream, einen Ort der Anzeigeschnittstelle des mindestens einen Videostreams, eine Lautstärke des mindestens einen Videostreams oder eine Startzeit, zu der der Benutzer den mindestens einen Videostream jedes Mal bearbeitet.

6. Verfahren nach einem der Ansprüche 1 bis 5, wobei das Verfahren ferner Folgendes umfasst:
als Reaktion auf eine Videofreigabeanforderung Zusammenfassen der von den Kameras aufgezeichneten Videodateien zu einer fünften Videodatei auf Grundlage der ersten Beschreibungsdatei und Freigeben der fünften Videodatei.

7. Verfahren nach einem der Ansprüche 1 bis 6, wobei die Videoaufzeichnungsinformationen eines oder mehrere von Folgendem umfassen: Aufzeichnungsstartzeit der Kameras, Identifikationsinformationen der Kameras, Anzeigearten der Aufzeichnungsschnittstellen der Kameras, ein Videoaufzeichnungsverhältnis oder einen Drehwinkel der Anzeige des Endgeräts, zu dem die Vielzahl von Kameras im Videoaufzeichnungsprozess gehört; und
die Bedienungsinformationen eines oder mehrere von Folgendem umfassen: Informationen zur Größenanpassung der Aufzeichnungsschnittstellen der Kameras, Informationen zur Anzeigeanpassung der Aufzeichnungsschnittstellen der Kameras oder Startzeit, zu der der Benutzer die Aufzeichnungsschnittstellen der Kameras jedes Mal bedient.

8. Vorrichtung (300) zur Mehrfachszenenaufzeichnung, umfassend:
ein Bestimmungsmodul (301), das dazu konfiguriert ist, zu bestimmen, dass sich eine Vielzahl von Kameras auf einem ersten Endgerät in einem Videoaufzeichnungszustand befindet, wobei Videoaufzeichnungsschnittstellen der Kameras auf einer Anzeige des ersten Endgeräts angezeigt werden; und
ein Verarbeitungsmodul (302), das dazu konfiguriert ist, eine erste Beschreibungsdatei zu erzeugen, wobei die erste Beschreibungsdatei Videoaufzeichnungsinformationen der Kameras und Bedienungsinformationen eines Benutzers in einem Videoaufzeichnungsprozess umfasst, die erste Beschreibungsdatei verwendet wird, um auf derselben Schnittstelle gleichzeitig einen ersten Vorgang an von den Kameras aufgezeichneten Videodateien durchzuführen, und der erste Vorgang mindestens eines von Abspielen, Bearbeiten und Teilen umfasst und die von den Kameras aufgezeichneten Videodateien separat gespeichert werden.

9. Vorrichtung nach Anspruch 8, wobei das Verarbeitungsmodul ferner zu Folgendem konfiguriert ist:
Bestimmen, dass eine von einer ersten Kamera aufgezeichnete erste Videodatei sich in einem Wiedergabezustand befindet, wobei die Vielzahl von Kameras die erste Kamera umfasst; und
Laden einer zweiten Videodatei, die von einer zweiten Kamera aufgezeichnet wurde, in eine Wiedergabeschnittstelle der ersten Videodatei auf Grundlage der ersten Beschreibungsdatei, wobei die Vielzahl von Kameras die zweite Kamera umfasst und eine erste Zuordnungsbeziehung zwischen der ersten Beschreibungsdatei, der ersten Videodatei und der zweiten Videodatei besteht.

10. Vorrichtung nach Anspruch 8 oder 9, wobei das Verarbeitungsmodul ferner zu Folgendem konfiguriert ist:
Bestimmen, dass eine dritte Videodatei, die von einer dritten Kamera aufgezeichnet wurde, sich in einem Bearbeitungszustand befindet, wobei die Vielzahl von Kameras die dritte Kamera umfasst;
Laden einer vierten Videodatei, die von einer vierten Kamera aufgezeichnet wurde, in eine Bearbeitungsschnittstelle der dritten Videodatei auf Grundlage der ersten Beschreibungsdatei, wobei die Vielzahl von Kameras die vierte Kamera umfasst und eine zweite Zuordnungsbeziehung zwischen der ersten Beschreibungsdatei, der dritten Videodatei und der vierten Videodatei besteht;
Bestimmen von Bearbeitungsinformationen des Benutzers für eine Zielvideodatei, wobei die Zielvideodatei mindestens eine von der dritten Videodatei und der vierten Videodatei umfasst; und
Aktualisieren der ersten Beschreibungsdatei auf Grundlage der Bearbeitungsinformationen.

11. Vorrichtung nach Anspruch 10, wobei eine Originalvideodatei der Zielvideodatei nicht verändert wird.

12. Vorrichtung nach Anspruch 10 oder 11, wobei die Bearbeitungsinformationen eines oder mehrere von Folgendem umfassen: eine Größe einer Anzeigeschnittstelle von mindestens einem Videostream, einen Ort der Anzeigeschnittstelle des mindestens einen Videostreams, eine Lautstärke des mindestens einen Videostreams oder eine Startzeit, zu der der Benutzer den mindestens einen Videostream jedes Mal bearbeitet.

13. Elektronische Vorrichtung, umfassend:
mindestens einen Speicher, der zum Speichern eines Programms konfiguriert ist; und
einen Prozessor, der dazu konfiguriert ist, das Programm, das in dem Speicher gespeichert ist, abzurufen, um das Verfahren nach einem der Ansprüche 1 bis 7 durchzuführen.

14. Computerspeichermedium, wobei das Computerspeichermedium ein Computerprogramm speichert und, wenn das Computerprogramm durch einen Prozessor ausgeführt wird, das Verfahren nach einem der Ansprüche 1 bis 7 umgesetzt wird.

15. Chip (1400), umfassend mindestens einen Prozessor (1401) und eine Schnittstelle (1402), wobei
der mindestens eine Prozessor Programmanweisungen oder Daten über die Schnittstelle erlangt; und
der mindestens eine Prozessor zum Ausführen der Programmanweisungen konfiguriert ist, um das Verfahren gemäß einem der Ansprüche 1 bis 7 umzusetzen.

## Revendications

1. Procédé d'enregistrement vidéo multi-scène, dans lequel le procédé comprend :
la détermination (S101) du fait qu'une pluralité de caméras sur un premier terminal sont dans un état d'enregistrement vidéo, dans lequel des interfaces d'enregistrement vidéo des caméras sont affichées sur un affichage du premier terminal ; et
la génération (S102) d'un premier fichier de description, dans lequel le premier fichier de description comprend des informations d'enregistrement vidéo des caméras et des informations de fonctionnement d'un utilisateur dans un processus d'enregistrement vidéo, le premier fichier de description est utilisé pour réaliser simultanément, sur une même interface, une première opération sur des fichiers vidéo enregistrés par les caméras, la première opération comprend au moins l'une des opérations suivantes : lecture, édition et partage, et les fichiers vidéo enregistrés par les caméras sont stockés séparément.

2. Procédé selon la revendication 1, dans lequel le procédé comprend également :
la détermination du fait qu'un premier fichier vidéo enregistré par une première caméra est dans un état de lecture, dans lequel la pluralité de caméras comprend la première caméra ; et
le chargement, sur la base du premier fichier de description, d'un deuxième fichier vidéo enregistré par une deuxième caméra sur une interface de lecture du premier fichier vidéo, dans lequel la pluralité de caméras comprennent la deuxième caméra, et il existe une première relation d'association entre le premier fichier de description, le premier fichier vidéo et le deuxième fichier vidéo.

3. Procédé selon la revendication 1 ou 2, dans lequel le procédé comprend également :
la détermination du fait qu'un troisième fichier vidéo enregistré par une troisième caméra est dans un état d'édition, dans lequel la pluralité de caméras comprend la troisième caméra ;
le chargement, sur la base du premier fichier de description, d'un quatrième fichier vidéo enregistré par une quatrième caméra sur une interface d'édition du troisième fichier vidéo, dans lequel la pluralité de caméras comprend la quatrième caméra, et il existe une seconde relation d'association entre le premier fichier de description, le troisième fichier vidéo et le quatrième fichier vidéo ;
la détermination d'informations d'édition de l'utilisateur pour un fichier vidéo cible, dans lequel le fichier vidéo cible comprend au moins l'un du troisième fichier vidéo et du quatrième fichier vidéo ; et
la mise à jour du premier fichier de description sur la base des informations d'édition.

4. Procédé selon la revendication 3, dans lequel un fichier vidéo original du fichier vidéo cible n'est pas modifié.

5. Procédé selon la revendication 3 ou 4, dans lequel les informations d'édition comprennent l'un ou plusieurs des éléments suivants : une taille d'une interface d'affichage d'au moins un flux vidéo, un emplacement de l'interface d'affichage de l'au moins un flux vidéo, le volume de l'au moins un flux vidéo, ou l'heure de début à laquelle l'utilisateur édite l'au moins un flux vidéo à chaque fois.

6. Procédé selon l'une quelconque des revendications 1 à 5, dans lequel le procédé comprend également :
en réponse à une demande de partage de vidéo, la synthèse, sur la base du premier fichier de description, des fichiers vidéo enregistrés par les caméras dans un cinquième fichier vidéo, et le partage du cinquième fichier vidéo.

7. Procédé selon l'une quelconque des revendications 1 à 6, dans lequel les informations d'enregistrement vidéo comprennent l'un ou plusieurs des éléments suivants : l'heure de début d'enregistrement des caméras, des informations d'identification des caméras, des modes d'affichage des interfaces d'enregistrement des caméras, un rapport d'enregistrement vidéo ou un angle de rotation de l'affichage du terminal auquel appartient la pluralité de caméras dans le processus d'enregistrement vidéo ; et
les informations de fonctionnement comprennent l'un ou plusieurs des éléments suivants : des informations de réglage de taille des interfaces d'enregistrement des caméras, des informations de réglage d'affichage des interfaces d'enregistrement des caméras, ou l'heure de début à laquelle l'utilisateur actionne les interfaces d'enregistrement des caméras à chaque fois.

8. Appareil d'enregistrement vidéo multi-scène (300) comprenant :
un module de détermination (301), configuré pour déterminer le fait qu'une pluralité de caméras sur un premier terminal est dans un état d'enregistrement vidéo, dans lequel des interfaces d'enregistrement vidéo des caméras sont affichées sur un affichage du premier terminal ; et
un module de traitement (302), configuré pour générer un premier fichier de description, dans lequel le premier fichier de description comprend des informations d'enregistrement vidéo des caméras et des informations de fonctionnement d'un utilisateur dans un processus d'enregistrement vidéo, le premier fichier de description est utilisé pour réaliser simultanément, sur une même interface, une première opération sur des fichiers vidéo enregistrés par les caméras, la première opération comprend au moins l'une des opérations suivantes : lecture, édition et partage, et les fichiers vidéo enregistrés par les caméras sont stockés séparément.

9. Appareil selon la revendication 8, dans lequel le module de traitement est également configuré pour :
déterminer le fait qu'un premier fichier vidéo enregistré par une première caméra est dans un état de lecture, dans lequel la pluralité de caméras comprend la première caméra ; et
charger, sur la base du premier fichier de description, un deuxième fichier vidéo enregistré par une deuxième caméra sur une interface de lecture du premier fichier vidéo, dans lequel la pluralité de caméras comprend la deuxième caméra, et il existe une première relation d'association entre le premier fichier de description, le premier fichier vidéo et le deuxième fichier vidéo.

10. Appareil selon la revendication 8 ou 9, dans lequel le module de traitement est également configuré pour :
déterminer le fait qu'un troisième fichier vidéo enregistré par une troisième caméra est dans un état d'édition, dans lequel la pluralité de caméras comprend la troisième caméra ;
charger, sur la base du premier fichier de description, un quatrième fichier vidéo enregistré par une quatrième caméra sur une interface d'édition du troisième fichier vidéo, dans lequel la pluralité de caméras comprend la quatrième caméra, et il existe une seconde relation d'association entre le premier fichier de description, le troisième fichier vidéo et le quatrième fichier vidéo ;
déterminer des informations d'édition de l'utilisateur pour un fichier vidéo cible, dans lequel le fichier vidéo cible comprend au moins l'un du troisième fichier vidéo et du quatrième fichier vidéo ; et
mettre à jour le premier fichier de description sur la base des informations d'édition.

11. Appareil selon la revendication 10, dans lequel un fichier vidéo original du fichier vidéo cible n'est pas modifié.

12. Appareil selon la revendication 10 ou 11, dans lequel les informations d'édition comprennent l'un ou plusieurs des éléments suivants : une taille d'une interface d'affichage d'au moins un flux vidéo, un emplacement de l'interface d'affichage de l'au moins un flux vidéo, le volume de l'au moins un flux vidéo, ou l'heure de début à laquelle l'utilisateur édite l'au moins un flux vidéo à chaque fois.

13. Dispositif électronique, comprenant :
au moins une mémoire, configurée pour stocker un programme ; et
au moins un processeur, configuré pour faire appel au programme stocké dans la mémoire, pour réaliser le procédé selon l'une quelconque des revendications 1 à 7.

14. Support de stockage informatique, dans lequel le support de stockage informatique stocke un programme informatique, et lorsque le programme informatique est exécuté par un processeur, le procédé selon l'une quelconque des revendications 1 à 7 est mis en œuvre.

15. Puce (1400), comprenant au moins un processeur (1401) et une interface (1402), dans laquelle
l'au moins un processeur obtient des instructions de programme ou des données par le biais de l'interface ; et
l'au moins un processeur est configuré pour exécuter les instructions de programme, pour mettre en œuvre le procédé selon l'une quelconque des revendications 1 à 7.
